# EUROPEAN PATENT APPLICATION

(11) **EP 4 621 907 A1**
(43) Date of publication of application: **24.09.2025**
(21) Application number: 23923243.2
(22) Date of filing: 20.02.2023
(51) Int. Cl.: H01M 10/0566, H01M 10/0567, H01M 10/0568

(54) **NON-AQUEOUS ELECTROLYTE SOLUTION AND LITHIUM SECONDARY BATTERY THEREOF, AND ELECTRICAL DEVICE**

(71) Applicant: Contemporary Amperex Technology (Hong Kong) Limited, Hong Kong (HK)
(72) Inventor: ZHANG, Limei, Ningde, Fujian 352100 (CN); CHEN, Peipei, Ningde, Fujian 352100 (CN); LIU, Jiao, Ningde, Fujian 352100 (CN); REN, Jiamo, Ningde, Fujian 352100 (CN)
(74) Representative: Ziebig Hengelhaupt Intellectual Property Attorneys Patentanwaltskanzlei PartGmbB
(86) International application number: PCT/CN2023/077118
(87) International publication number: WO 2024/174057

(57) **Abstract**

This application relates to a nonaqueous electrolyte solution. The nonaqueous electrolyte solution includes at least one additive represented by general formula I and Na and/or K ions. The nonaqueous electrolyte solution is configured to prepare a lithium secondary battery, and can improve a cycle life of the lithium secondary battery at relatively high temperature, reduce a volume expansion rate of the lithium secondary battery stored at high temperature for a long time, and in turn, improve a capacity retention rate of the lithium secondary battery stored at relatively high temperature for a long time. This application further relates to a lithium secondary battery containing the nonaqueous electrolyte solution and an electrical device containing the lithium secondary battery.

## Description

### TECHNICAL FIELD

This application relates to a nonaqueous electrolyte solution and a lithium secondary battery containing the nonaqueous electrolyte solution. In addition, this application further relates to an electrical device containing the lithium secondary battery.

### BACKGROUND

In recent years, with the advancement of technology of lithium-ion secondary batteries, lithium-ion secondary batteries have been widely applied in energy storage power systems such as hydro, thermal, wind, and solar power stations, and in many other fields such as electric tools, electric bicycles, electric motorcycles, electric vehicles, military equipment, and aerospace. The great development of the lithium-ion secondary batteries gives rise to higher requirements on the energy density, cycle performance, safety performance, and other performance of the batteries.

Therefore, improvements still need to be made to the lithium-ion secondary batteries.

### SUMMARY

This application addresses the above subject-matter. One objective of this application is to provide a nonaqueous electrolyte solution. The nonaqueous electrolyte solution is configured to prepare a lithium secondary battery to improve the cycle life of the lithium secondary battery at relatively high temperature, reduce the volume expansion rate of the lithium secondary battery stored at high temperature (such as 60 °C) for a long time (such as 30 days), and in turn, improve the capacity retention rate of the lithium secondary battery stored at relatively high temperature for a long time.

Therefore, this application discloses a nonaqueous electrolyte solution. The nonaqueous electrolyte solution includes: (1) at least one additive represented by general formula I; and (2) Na and/or K ions.

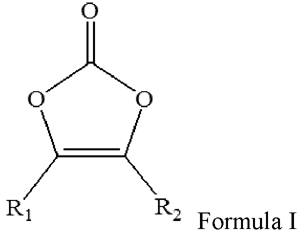

In the formula above, R₁ and R₂ each are independently hydrogen, hydroxyl, amino, thiol, halogen, C₁ to C₆ alkyl, C₁ to C₆ haloalkyl, C₂ to C₆ alkenyl, C₂ to C₆ alkynyl, or a group represented by a general formula II:

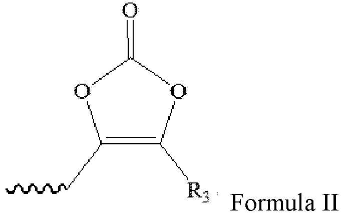

In the formula above, R₃ is hydrogen, hydroxyl, amino, thiol, halogen, C₁ to C₆ alkyl, C₁ to C₆ haloalkyl, C₂ to C₆ alkenyl, or C₂ to C₆ alkynyl.

In Formula II, a wavy line represents a bonding site to Formula I.

Without intending to be bound by any theory, it is found that the nonaqueous electrolyte solution contains at least one additive of the general formula I (hereinafter referred to as additive 1) and Na and/or K ions, and plays the following role: during charge and discharge, the additive 1 and Na and/or K ions play a role in coordinating to form an organic-inorganic composite SEI film at a negative electrode. The film is dense. The inorganic constituents in the film can prevent electron tunneling, so as to partially or fully prevent byproducts from contacting the negative electrode and thereby undergoing a reduction reaction to consume active lithium, where the byproducts are generated by the positive active material oxidizing the electrolyte solution. In addition, the film partially or fully prevents the dissolved Mn ions from damaging a negative electrode SEI film, and in turn, improves the cycle performance and high-temperature storage performance of the lithium secondary battery at relatively high temperature. Further, it is found that the organic-inorganic composite SEI film formed through coordination of the additive 1 and the Na and/or K ions enhances the elasticity of the SEI film, and can partially or fully prevent the expansion and shrinkage of the negative electrode plate from damaging the SEI film, thereby further improving the cycle performance of the lithium secondary battery.

In this application, "lithium-ion battery", "lithium secondary battery", and "lithium-ion secondary battery" are used synonymously.

In any embodiment, R₁ and R₂ each are independently hydrogen, fluorine, methyl, ethyl, propyl, tert-butyl, vinyl, monofluoromethyl, difluoromethyl, trifluoromethyl, or a group represented by general formula II. In general formula II, R₃ is hydrogen, fluorine, methyl, ethyl, propyl, tert-butyl, vinyl, monofluoromethyl, difluoromethyl, or trifluoromethyl.

In any embodiment, the additive represented by general formula I includes the following compounds:

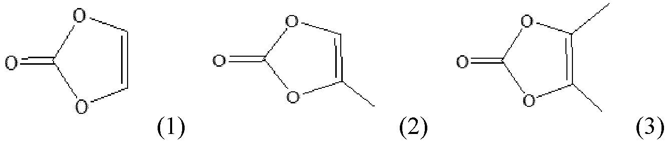

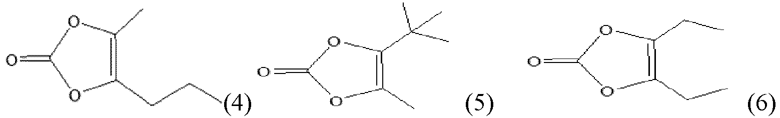

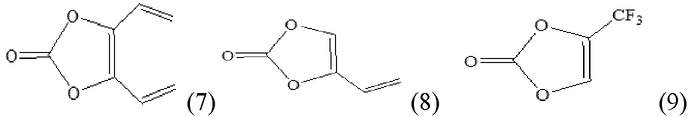

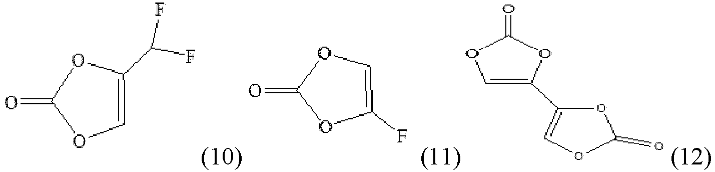

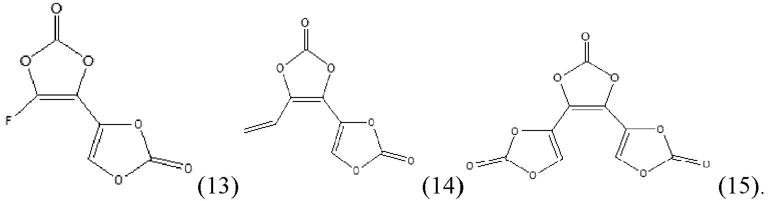

In any embodiment, a ratio of a mass of the Na and/or K ions in the nonaqueous electrolyte solution to a mass of the additive represented by general formula I is W, satisfying: 0.00003 ≤ W ≤ 1, optionally 0.0005 ≤ W ≤ 0.50, and further optionally 0.0005 ≤ W ≤ 0.10.

It is found that, when the Na or K ions and the mass of the additive of the general formula I satisfy the above relationship, the mass percent of the organic constituents and the mass percent of the inorganic constituents in the SEI film are favorable, thereby further improving the cycle performance and high-temperature storage performance of the lithium-ion secondary battery at relatively high temperature.

In any embodiment, a mass fraction of the Na and/or K ions in relation to a total mass of the electrolyte solution is 0.5 to 3000 ppm, optionally 10 to 1500 ppm, and further optionally 50 to 1000 ppm. When the Na or K ions satisfy the above range, the SEI film is dense and can effectively prevent electron tunneling, thereby improving the cycle performance and high-temperature storage performance of the lithium-ion battery at relatively high temperature.

In any embodiment, a mass percent of the additive represented by general formula I in relation to a total mass of the electrolyte solution is 0.05 wt% to 20 wt%, optionally 0.1 wt% to 10 wt%, and further optionally 0.3 wt% to 8 wt%.

In any embodiment, the nonaqueous electrolyte solution includes a sodium salt and/or a potassium salt, and anions of the sodium salt and/or potassium salt include one or more of AsF⁻, ClO₄⁻, SbF₆⁻, PtCl₆⁻, AlCl₄⁻, SCN⁻, CF₃CF₂SO₃⁻, (CF₃)SO₃⁻, C(SO₂CF₃)₃⁻, PF6⁻, PF₃(CF₃)₃⁻, BF₄⁻, B(C₂O₄)₂⁻, BF₂(C₂O₄)⁻, B(C₂O₄)(C₃O₄)⁻, (C₂F₅BF₃)⁻, N(SO₂CF₃)₂⁻, N(FSO₂)₂⁻, and/or N(SO₂C₂F₅)₂⁻.

A second aspect of this application provides a lithium secondary battery. The lithium secondary battery includes a positive electrode plate, a negative electrode plate, and the nonaqueous electrolyte solution according to the first aspect of this application.

In any embodiment, the positive electrode plate includes a positive active material, and a surface oxygen valence state of the positive active material is -1.87 or lower, and optionally -1.98 to -1.90. The surface oxygen valence state of the positive active material may be determined by, for example, the method described in an embodiment hereof. When falling within the above range, the surface oxygen valence state of the positive active material can avoid the following possible situations: due to an excessively high surface oxygen valence state of the positive active material, the positive active material is highly capable of gaining electrons, so as to oxidize the electrolyte solution to produce a large amount of by-products, thereby impairing the cycle performance and high-temperature storage performance of the lithium secondary battery at relatively high temperature.

In any embodiment, the lithium manganese iron phosphate material includes lithium manganese iron phosphate, doped lithium manganese iron phosphate, and core-shell structured lithium manganese iron phosphate.

In any embodiment, the lithium manganese iron phosphate material is represented by a chemical formula Li₁₊ₓMn_{1-y}A_{y}P_{1-z}R_{z}O₄, where x is any value in a range of -0.100 to 0.100; y is any value in a range of 0.001 to 0.500; z is any value in a range of 0.001 to 0.100; A is Fe or a combination of Fe and one or more of Ti, V, Ni, Co, or Mg ion; R is one or more selected from B, Si, N, or S ion; optionally, R is one ion selected from B, Si, N, or S; and values of x, y, and z satisfy a condition that an entire positive active material is kept electrically neutral.

In any embodiment, the lithium manganese iron phosphate material is core-shell structured lithium manganese iron phosphate, and a chemical formula of the core is Li₁₊ₓMn_{1-y}A_{y}P_{1-z}R_{z}O₄, where x is any value in a range of -0.100 to 0.100; y is any value in a range of 0.001 to 0.500; z is any value in a range of 0.001 to 0.100; A is Fe or a combination of Fe and one or more of elements Ti, V, Ni, Co, or Mg; R is one or more selected from elements B, Si, N, or S; optionally, R is one element selected from B, Si, N, or S; and values of x, y, and z satisfy a condition that the entire core is kept electrically neutral; the shell includes a first coating layer that coats the core, a second coating layer that coats the first coating layer, and a third coating layer that coats the second coating layer; the first coating layer includes a crystalline pyrophosphate salt LiₐMP₂O₇ and/or M_{b}(P₂O₇)_{c}, where 0 ≤ a ≤ 2, 1 ≤ b ≤ 4, 1 ≤ c ≤ 6, and values of a, b and c satisfy a condition that the crystalline pyrophosphate salt LiₐMP₂O₇ or M_{b}(P₂O₇)_{c} is kept electrically neutral; each M in the crystalline pyrophosphate salt LiₐMP₂O₇ or M_{b}(P₂O₇)_{c} is independently one or more elements selected from Fe, Ni, Mg, Co, Cu, Zn, Ti, Ag, Zr, Nb, or Al; the second coating layer includes a crystalline phosphate salt XPO₄, where X is one or more elements selected from Li, Fe, Ni, Mg, Co, Cu, Zn, Ti, Ag, Zr, Nb, or Al; and the third coating layer is carbon.

The advantages of using the lithium manganese iron phosphate material over lithium iron phosphate are as follows:
The theoretical capacity of the lithium manganese iron phosphate is the same as that of lithium iron phosphate, both being 170 mAh/g. However, the electrode potential of lithium manganese iron phosphate vs Li⁺/Li is 4.1V, much higher than the electrode potential 3.4 V of lithium iron phosphate, that is, 0.7 V higher than that of lithium iron phosphate; and the voltage plateau is elevated by 20% and lies in a stable electrochemical window of the organic electrolyte solution system. In this way, the energy density of a lithium secondary battery that uses the same mass of lithium manganese iron phosphate is increased, for example, increased from 578 Wh/kg to 697 Wh/kg. In addition, lithium manganese iron phosphate exhibits the same advantages as lithium iron phosphate, such as cost-effectiveness, high safety performance, high thermal stability, no spontaneous combustion in response to puncture or overcharge, a long life, and safety against explosion hazards. Lithium manganese iron phosphate is regarded as exhibiting the advantages of both lithium iron phosphate and lithium manganese phosphate, and can make up for the shortcoming of a low energy density of lithium iron phosphate.

After the lithium manganese iron phosphate material is doped and coated, the damage caused by Mn dissolution to the negative electrode SEI film is effectively reduced. In addition, the coating treatment can reduce the contact between the core lithium manganese iron phosphate and the electrolyte solution, thereby further improving the cycle performance and high-temperature storage performance of the lithium secondary battery at relatively high temperature.

A third aspect of this application provides an electrical device. The electrical device includes the lithium secondary battery according to the second aspect of this application.

### BRIEF DESCRIPTION OF DRAWINGS

FIG. 1 is a schematic diagram of a battery cell according to an embodiment of this application;
FIG. 2 is an exploded view of a battery cell shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of a battery pack shown in FIG. 4 according to an embodiment of this application; and
FIG. 6 is a schematic diagram of an electrical device that uses a lithium secondary battery as a power supply according to an embodiment of this application.

### List of reference numerals:

1. battery pack; 2. upper box; 3. lower box; 4. battery module; 5. lithium secondary battery; 51. housing; 52. electrode assembly; 53. top cap assembly.

### DETAILED DESCRIPTION

The following discloses and describes in detail a nonaqueous electrolyte solution, a lithium secondary battery, and an electrical device according to some embodiments of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 6. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and optionally, in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

As a positive active material of lithium-ion secondary batteries, a lithium manganese iron phosphate material exhibits the advantages of a high capacity, high safety, and cost-effectiveness. However, it is found that the specific surface area (BET) of the lithium manganese iron phosphate material is large, and the surface oxidation state of the material is high, thereby being prone to oxidize the electrolyte solution to produce by-products. The by-products undergo reduction reactions when moving to the negative electrode, thereby consuming active lithium and deteriorating the cycle performance and storage performance of the lithium secondary battery. In addition, Mn ions are dissolved out from the lithium manganese iron phosphate during high-temperature cycling. The Mn ions diffuse to the negative electrode and undergo reduction reactions on the surface of the negative electrode, thereby damaging the negative electrode SEI film and causing the negative electrode SEI film to keep growing. The continuous growth of the negative electrode SEI film consumes active lithium, thereby causing lithium loss, and leading to an increase in the impedance of the battery. Based on the above findings, the inventor of this application discloses a nonaqueous electrolyte solution. When applied to a lithium secondary battery, the nonaqueous electrolyte solution can improve the cycle life of the lithium secondary battery at relatively high temperature (such as 45 °C), reduce the volume expansion rate of the lithium secondary battery stored at high temperature (such as 60 °C) for a long time (such as 30 days), and in turn, improve the capacity retention rate of the lithium secondary battery stored at relatively high temperature for a long time.

Therefore, this application discloses a nonaqueous electrolyte solution. The nonaqueous electrolyte solution includes:
(1) at least one additive represented by general formula I; and
(2) Na and/or K ions.

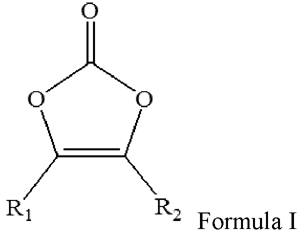

In the formula above, R1 and R2 each are independently hydrogen, hydroxyl, amino, thiol, halogen, C₁ to C₆ alkyl, C₁ to C₆ haloalkyl, C₂ to C₆ alkenyl, C₂ to C₆ alkynyl, or a group represented by a general formula II:

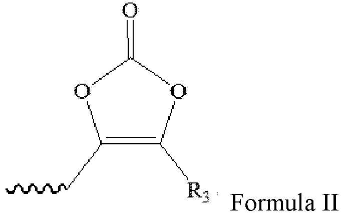

In Formula II, R₃ is hydrogen, hydroxyl, amino, thiol, halogen, C₁ to C₆ alkyl, C₁ to C₆ haloalkyl, C₂ to C₆ alkenyl, or C₂ to C₆ alkynyl.

In Formula II, a wavy line represents a bonding site to Formula I.

Generally, nonaqueous electrolyte solution refers to an electrolyte solution with a water content less than 20 ppm.

Without intending to be bound by any theory, it is found that the nonaqueous electrolyte solution contains at least one additive of the general formula I (hereinafter referred to as additive 1) and Na and/or K ions, and plays the following role: during charge and discharge, the additive 1 and Na and/or K ions play a role in coordinating to form an organic-inorganic composite SEI film at a negative electrode. The film is dense. The inorganic constituents in the film can prevent electron tunneling, so as to partially or fully prevent byproducts from contacting the negative electrode and thereby undergoing a reduction reaction to consume active lithium, where the byproducts are generated by the positive active material oxidizing the electrolyte solution. In addition, the film partially or fully prevents the dissolved Mn ions from damaging a negative electrode SEI film, and in turn, improves the cycle performance and high-temperature storage performance of the lithium secondary battery at relatively high temperature. Further, it is found that the organic-inorganic composite SEI film formed through coordination of the additive 1 and the Na and/or K ions enhances the elasticity of the SEI film, and can partially or fully prevent the expansion and shrinkage of the negative electrode plate from damaging the SEI film, thereby further improving the cycle performance of the lithium secondary battery.

Na and/or K ions may be added into the nonaqueous electrolyte solution in the form of a sodium salt and/or a potassium salt. In principle, any sodium salt/potassium salt is applicable as long as the salt contains a combination of sodium/potassium cations and any anions that can exist in the electrolyte solution. Optionally, the anions in the sodium/potassium salt are anions that are beneficial to the performance of the lithium-ion secondary battery. Further optionally, in the Na- and/or K-containing substances applicable in the nonaqueous electrolyte solution, sodium cations and/or potassium cations exist together with anions of AsF⁻, ClO₄⁻, SbF₆⁻, PtCl₆⁻, AlCl₄⁻, SCN⁻, CF₃CF₂SO₃⁻, (CF₃)SO₃⁻, C(SO₂CF₃)₃⁻, PF6⁻, PF₃(CF₃)₃⁻, BF₄⁻, B(C₂O₄)₂⁻, BF₂(C₂O₄)⁻, B(C₂O₄)(C₃O₄)⁻, (C₂F₅BF₃)⁻, N(SO₂CF₃)₂⁻, N(FSO₂)₂⁻, and/or N(SO₂C₂F₅)₂⁻.

In some embodiments, the nonaqueous electrolyte solution includes a sodium salt and/or a potassium salt, and anions of the sodium salt and/or potassium salt include one or more of AsF⁻, ClO₄⁻, SbF₆⁻, PtCl₆⁻, AlCl₄⁻, SCN⁻, CF₃CF₂SO₃⁻, (CF₃)SO₃⁻, C(SO₂CF₃)₃⁻, PF6⁻, PF₃(CF₃)₃⁻, BF₄⁻, B(C₂O₄)₂⁻, BF₂(C₂O₄)⁻, B(C₂O₄)(C₃O₄)⁻, (C₂F₅BF₃)⁻, N(SO₂CF₃)₂⁻, N(FSO₂)₂⁻, and/or N(SO₂C₂F₅)₂⁻.

The additive 1 and the Na and/or K ions and the contents thereof in the nonaqueous electrolyte solution may be determined by conventional means in the art. Optionally, the content of the additive 1 is determined by gas chromatography (GC). The content of Na and K ions is determined by an inductively coupled plasma (ICP) optical emission spectrometer.

As used herein, "halogen" means fluorine, chlorine, bromine, or iodine, optionally fluorine.

As used herein, "C₁ to C₆ alkyl" means a linear or branched alkyl group containing 1 to 6 carbon atoms, including but not limited to, methyl, ethyl, propyl, butyl, pentyl, hexyl, isopropyl, isobutyl, tert-butyl, isopentyl, tert-pentyl, neopentyl, 2-methylpentyl, 3-methylpentyl, 2,2-dimethylbutyl, 2,3-dimethylbutyl, or 3-ethylpentyl.

As used herein, the C₁ to C₆ haloalkyl group means a halogen-substituted C₁ to C₆ alkyl group.

As used herein, "C₂ to C₆ alkenyl" means a linear or branched alkenyl group containing 2 to 6 carbon atoms, including but not limited to, vinyl, propenyl, butenyl, pentenyl, hexenyl, isopropenyl, isobutenyl, isopentenyl, tert-pentenyl, neopentenyl, 2-methylpentenyl, 3-methylpentenyl, 2,2-dimethylbutenyl, 2,3-dimethylbutenyl, or 3-ethylpentenyl.

As used herein, "C₂ to C₆ alkynyl" means a linear or branched alkynyl group containing 2 to 6 carbon atoms, including but not limited to, ethynyl, propynyl, butynyl, pentynyl, hexynyl, isopropynyl, isobutynyl, isopentenyl, tert-pentynyl, neopentynyl, 2-methylpentynyl, 3-methylpentynyl, 2,2-dimethylbutynyl, 2,3-dimethylbutynyl, or 3-ethylpentynyl.

In some embodiments, R₁ and R₂ each are independently hydrogen, fluorine, methyl, ethyl, propyl, tert-butyl, vinyl, monofluoromethyl, difluoromethyl, trifluoromethyl, or a group represented by general formula II. In general formula II, R₃ is hydrogen, fluorine, methyl, ethyl, propyl, tert-butyl, vinyl, monofluoromethyl, difluoromethyl, or trifluoromethyl.

In some embodiments, the additive represented by general formula I includes the following compounds:

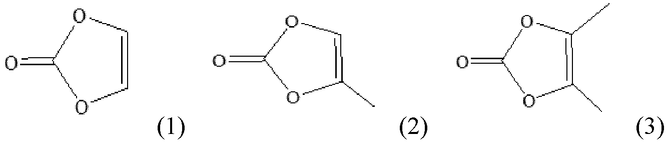

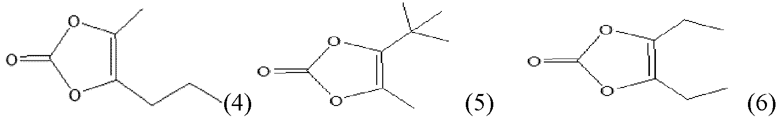

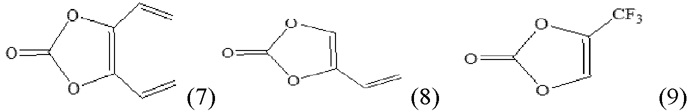

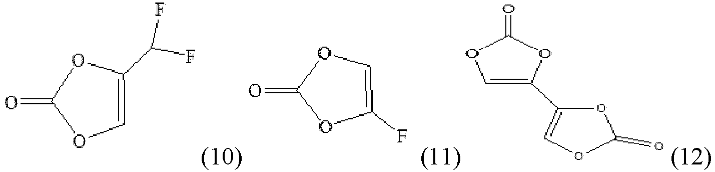

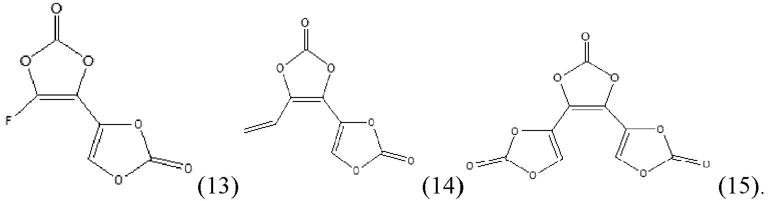

In some embodiments, a ratio of a mass of the Na and/or K ions in the nonaqueous electrolyte solution to a mass of the additive represented by general formula I is W, satisfying: 0.00003 ≤ W ≤ 1, optionally 0.0005 ≤ W ≤ 0.50, and further optionally 0.0005 ≤ W ≤ 0.10. For example, W may be 0.00005, 0.0001, 0.00015, 0.0002, 0.00025, 0.0003, 0.00035, 0.0004, 0.00045, 0.0005, 0.0006, 0.0007, 0.0008, 0.0009, 0.001, 0.002, 0.003, 0.004, 0.005, 0.006, 0.007, 0.008, 0.009, 0.01, 0.02, 0.03, 0.04, 0.05, 0.06, 0.07, 0.08, 0.09, 0.10, 0.20, 0.30, 0.40, 0.50, 0.60, 0.70, 0.80, 0.90, or 1.

It is found that, when the mass of the Na or K ions and the mass of the additive specified herein satisfy the above relationship, the mass percent of the organic constituents and the mass percent of the inorganic constituents in the SEI film are favorable, thereby further improving the cycle performance and high-temperature storage performance of the lithium-ion secondary battery at relatively high temperature.

In some embodiments, a mass fraction of the Na and/or K ions in relation to a total mass of the electrolyte solution is 0.5 to 3000 ppm, optionally 10 to 1500 ppm, and further optionally 50 to 1000 ppm. For example, the mass fraction of the Na and/or K ions in relation to the total mass of the electrolyte solution is 0.5 ppm, 0.6 ppm, 0.7 ppm, 0.8 ppm, 0.9 ppm, 1 ppm, 2 ppm, 3 ppm, 4 ppm, 5 ppm, 6 ppm, 7 ppm, 8 ppm, 9 ppm, 10 ppm, 20 ppm, 30 ppm, 40 ppm, 50 ppm, 60 ppm, 70 ppm, 80 ppm, 90 ppm, 100 ppm, 200 ppm, 300 ppm, 400 ppm, 500 ppm, 600 ppm, 700 ppm, 800 ppm, 900 ppm, 1000 ppm, 2000 ppm, or 3000 ppm.

It is found that when the Na or K ions satisfy the above range, the SEI film is dense and can effectively prevent electron tunneling, thereby improving the cycle performance and high-temperature storage performance of the lithium-ion secondary battery at relatively high temperature.

In some embodiments, a mass percent of the additive represented by general formula I in relation to a total mass of the electrolyte solution is 0.05 wt% to 20 wt%, optionally 0.1 wt% to 10 wt%, and further optionally 0.3 wt% to 8 wt%. For example, the mass percent of the additive of the general formula I in relation to the total mass of the electrolyte solution may be 0.05 wt%, 0.1 wt%, 0.5 wt%, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, or 20 wt%.

The mass percent of the Na and K ions in the electrolyte solution in this application may be determined by, for example, an inductively coupled plasma-atomic emission spectrometer (ICP) with reference to the P.R.C non-ferrous metal industry standard YS/T 833-2020 *Ammonium Rhenate Chemical Analysis Method-Determining Content of Beryllium, Magnesium, Aluminum, Potassium, Calcium, Titanium, Chromium, Manganese, Iron, Cobalt, Copper, Zinc, Molybdenum, Lead, Tungsten, Sodium, Tin, Nickel, and Silicon-Inductively Coupled Plasma-Atomic Emission Spectroscopy (ICP).*

A second aspect of this application provides a lithium secondary battery. The lithium secondary battery includes a positive electrode plate, a negative electrode plate, and the nonaqueous electrolyte solution according to the first aspect of this application.

The positive electrode plate includes a positive active material. In principle, the positive active material may be any manganese-containing active material that can easily oxidize an electrolyte solution and that is applicable to a positive electrode of a lithium secondary battery.

In some embodiments, a surface oxygen valence state of the positive active material is -1.87 or lower, and optionally -1.98 to -1.90. For example, the surface oxygen valence state of the positive active material is -1.87, -1.88, -1.89, -1.90, -1.91, -1.92, -1.93, -1.94, -1.95, -1.96, -1.97, -1.98, or -1.99.

The surface oxygen valence state of the positive active material may be determined by, for example, the method described in an embodiment hereof.

When falling within the above range, the surface oxygen valence state of the positive active material can avoid the following possible situations: due to an excessively high surface oxygen valence state of the positive active material, the positive active material is highly capable of gaining electrons, so as to oxidize the electrolyte solution to produce a large amount of by-products, thereby impairing the cycle performance and high-temperature storage performance of the lithium secondary battery at relatively high temperature.

In some embodiments, the positive electrode plate includes a lithium manganese iron phosphate material. The lithium manganese iron phosphate material is a positive active material that contains manganese, iron, lithium, and a phosphate radical and that can serve as a positive electrode of a lithium secondary battery.

In some embodiments, the types of lithium manganese iron phosphate material include, but are not limited to, lithium manganese iron phosphate, doped lithium manganese iron phosphate, and core-shell structured lithium manganese iron phosphate.

The doped lithium manganese iron phosphate may be lithium manganese iron phosphate doped with one or more of elements Ti, V, Ni, Co, Mg, B, Si, N, or S. The preparation method of the doped lithium manganese iron phosphate material may be any preparation method known in the art. Optionally, the doped lithium manganese iron phosphate material is prepared by a method similar to the method described in the embodiment section herein.

In some embodiments, the lithium manganese iron phosphate material is represented by a chemical formula Li₁₊ₓMn_{1-y}A_{y}P_{1-z}R_{z}O₄, where x is any value in a range of -0.100 to 0.100; y is any value in a range of 0.001 to 0.500; z is any value in a range of 0.001 to 0.100; A is Fe or a combination of Fe and one or more of elements Ti, V, Ni, Co, or Mg; R is one or more selected from elements B, Si, N, or S; optionally, R is one element selected from B, Si, N, or S; and values of x, y, and z satisfy a condition that an entire positive active material is kept electrically neutral.

The core-shell structured lithium manganese iron phosphate may be obtained by coating the lithium manganese iron phosphate or the doped lithium manganese iron phosphate. The coating method may be any method known in the art for coating a positive active material.

In some embodiments, the lithium manganese iron phosphate material is core-shell structured lithium manganese iron phosphate, and a chemical formula of the core is Li₁₊ₓMn_{1-y}A_{y}P_{1-z}R_{z}O₄, where x is any value in a range of -0.100 to 0.100; y is any value in a range of 0.001 to 0.500; z is any value in a range of 0.001 to 0.100; A is Fe or a combination of Fe and one or more of elements Ti, V, Ni, Co, or Mg; R is one or more selected from elements B, Si, N, or S; optionally, R is one element selected from B, Si, N, or S; and values of x, y, and z satisfy a condition that the entire core is kept electrically neutral; the shell includes a first coating layer that coats the core, a second coating layer that coats the first coating layer, and a third coating layer that coats the second coating layer; the first coating layer includes a crystalline pyrophosphate salt LiₐMP₂O₇ and/or M_{b}(P₂O₇)_{c}, where 0 ≤ a ≤ 2, 1 ≤ b ≤ 4, 1 ≤ c ≤ 6, and values of a, b and c satisfy a condition that the crystalline pyrophosphate salt LiₐMP₂O₇ or M_{b}(P₂O₇)_{c} is kept electrically neutral; each M in the crystalline pyrophosphate salt LiₐMP₂O₇ or M_{b}(P₂O₇)_{c} is independently one or more elements selected from Fe, Ni, Mg, Co, Cu, Zn, Ti, Ag, Zr, Nb, or Al; the second coating layer includes a crystalline phosphate salt XPO₄, where X is one or more elements selected from Li, Fe, Ni, Mg, Co, Cu, Zn, Ti, Ag, Zr, Nb, or Al; and the third coating layer is carbon.

The advantages of using the lithium manganese iron phosphate material over lithium iron phosphate are as follows:

The theoretical capacity of the lithium manganese iron phosphate is the same as that of lithium iron phosphate, both being 170 mAh/g. However, the electrode potential of lithium manganese iron phosphate vs Li⁺/Li is 4.1V, much higher than the electrode potential 3.4 V of lithium iron phosphate, that is, 0.7 V higher than that of lithium iron phosphate; and the voltage plateau is elevated by 20% and lies in a stable electrochemical window of the organic electrolyte solution system. In this way, the energy density of a lithium secondary battery that uses the same mass of lithium manganese iron phosphate is increased, for example, increased from 578 Wh/kg to 697 Wh/kg. In addition, lithium manganese iron phosphate exhibits the same advantages as lithium iron phosphate, such as cost-effectiveness, high safety performance, high thermal stability, no spontaneous combustion in response to puncture or overcharge, a long life, and safety against explosion hazards. Lithium manganese iron phosphate is regarded as exhibiting the advantages of both lithium iron phosphate and lithium manganese phosphate, and can make up for the shortcoming of a low energy density of lithium iron phosphate.

After the lithium manganese iron phosphate material is doped and coated, the damage caused by Mn dissolution to the negative electrode SEI film is effectively reduced. In addition, the coating treatment can reduce the contact between the core lithium manganese iron phosphate and the electrolyte solution, thereby further improving the cycle performance and high-temperature storage performance of the lithium secondary battery at relatively high temperature.

A third aspect of this application provides an electrical device. The electrical device includes the lithium secondary battery according to the second aspect of this application.

Next, a lithium secondary battery and an electrical device of this application are described below with due reference to drawings.

In an embodiment of this application, a lithium secondary battery is provided.

Generally, the lithium secondary battery includes a positive electrode plate, a negative electrode plate, an electrolyte, and a separator. In a charge-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### [Positive electrode plate]

The positive electrode plate includes a positive current collector and a positive electrode film layer that overlays at least one surface of the positive current collector. The positive electrode film layer includes a positive active material according to the first aspect of this application.

As an example, the positive current collector includes two surfaces opposite to each other in a thickness direction of the positive current collector. The positive electrode film layer is disposed on either or both of the two opposite surfaces of the positive current collector.

In some embodiments, the positive current collector may be a metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.3}Co_{0.2}Mn_{0.3}O₂ (briefly referred to as NCM523), LiNi_{0.3}Co_{0.23}Mn_{0.23}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive electrode film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive electrode film layer further optionally includes a conductive agent. As an example, the conductive agent may include at least one of superconductive carbon, acetylene black, carbon black, Ketjen black, carbon dots, carbon nanotubes, graphene, or carbon nanofibers.

In the positive electrode film layer, optionally, the mass percent of the positive active material described in this application ranges from 70 wt% to 99 wt%, the mass percent of the binder ranges from 0.2 wt% to 15 wt%, and the mass percent of the conductive agent ranges from 0.2 wt% to 15 wt%, each based on the total mass of the positive electrode film.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

In some optional embodiments, the positive active material is a lithium manganese iron phosphate material. The lithium manganese iron phosphate material is described earlier above.

### [Negative electrode plate]

The negative electrode plate includes a negative current collector and a negative electrode film layer disposed on at least one surface of the negative current collector. The negative electrode film layer includes a negative active material.

As an example, the negative current collector includes two surfaces opposite to each other in a thickness direction of the negative current collector. The negative electrode film layer is disposed on either or both of the two opposite surfaces of the negative current collector.

In some embodiments, the negative current collector may be a metal foil or a composite current collector. For example, the metal foil may be copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well-known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may include at least one of elemental silicon, a silicon oxide compound, a silicon-carbon composite, a silicon-nitrogen composite, or a silicon alloy. The tin-based material may include at least one of elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination.

In some embodiments, the negative electrode film layer further optionally includes a binder. The binder may include at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), or carboxymethyl chitosan (CMCS).

In some embodiments, the negative electrode film layer further optionally includes a conductive agent. The conductive agent may include at least one of superconductive carbon, acetylene black, carbon black, Ketjen black, carbon dots, carbon nanotubes, graphene, or carbon nanofibers.

In some embodiments, the negative electrode film layer further optionally includes other agents, such as a thickener (for example, sodium carboxymethyl cellulose (CMC-Na)).

In the negative electrode film layer, the mass percent of the negative electrode material ranges from 70 wt% to 99 wt%, the mass percent of the binder ranges from 0.2 wt% to 15 wt%, and the mass percent of the conductive agent ranges from 0.2 wt% to 15 wt%, each based on the total mass of the positive electrode film.

In some embodiments, the negative electrode plate may be prepared according to the following method: dispersing the ingredients of the negative electrode plate such as the negative active material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

### [Electrolyte]

The electrolyte serves to conduct ions between the positive electrode plate and the negative electrode plate. The electrolyte described in this application is the nonaqueous electrolyte solution described in the first aspect of this application. The nonaqueous electrolyte solution includes an electrolyte salt and a solvent.

In this application, the electrolyte salt may be an electrolyte salt commonly used in a lithium-ion battery, such as a lithium salt, including a lithium salt that can serve as a highly thermally stable salt, a lithium salt that can serve as a low-resistance additive, or a lithium salt that can suppress aluminum foil corrosion. As an example, the electrolyte salt may include at least one of lithium hexafluorophosphate (LiPF₆), lithium tetrafluoroborate (LiBF₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato)borate (LiDFOB), lithium difluorophosphate (LiPO₂F₂), lithium difluoro(bisoxalato)phosphate (LiDFOP), lithium fluorosulfonate (LiSO₃F), difluorobisoxalate (NDFOP), Li₂F(SO₂N)₂SO₂F, KFSI, CsFSI, Ba(FSI)₂, or LiFSO₂NSO₂CH₂CH₂CF₃.

In some embodiments, the electrolyte salt may include at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, or lithium tetrafluoro(oxalato)phosphate.

In some embodiments, the mass percent of the electrolyte salt in the nonaqueous electrolyte solution may be 6.25% to 25%, and preferably 10% to 18.75%.

According to this application, the type of the nonaqueous solvent in the nonaqueous electrolyte solution is not particularly limited, and may be selected according to practical needs. Optionally, the nonaqueous solvent may include one or more of chain carbonate, cyclic carbonate, or carboxylate. In some embodiments, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetrahydrofuran, sulfolane (SF), methyl sulfonyl methane (MSM), ethyl methyl sulfone (EMS), or (ethylsulfonyl)ethane (ESE).

In some embodiments, the electrolyte solution further optionally includes another additive. For example, the additive may include a negative film-forming additive, a positive film-forming additive, and additives that can improve some performance of the battery, for example, an additive that improves overcharge performance of the battery, an additive that improves high-temperature performance of the battery, and an additive that improves low-temperature performance of the battery, and the like. As an example, the additive includes at least one of a cyclic carbonate compound containing an unsaturated bond, a halogenated cyclic carbonate compound, a sulfate compound, a sulfite compound, a sultone compound, a disulfonate compound, a nitrile compound, an aromatic compound, an isocyanate compound, a phosphazene compound, a cyclic anhydride compound, a phosphite compound, a phosphate compound, a borate compound, or a carboxylate compound.

### [Separator]

In some embodiments, the lithium secondary battery further includes a separator. The type of the separator is not particularly limited in this application, and may be any well-known porous separator that is highly stable both chemically and mechanically.

In some embodiments, the separator may be made of a material that includes at least one of glass fiber, non-woven fabric, polyethylene, polypropylene, or polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the lithium secondary battery may include an outer package. The outer package may be configured to package the electrode assembly and the electrolyte.

In some embodiments, the outer package of the lithium secondary battery may be a hard shell such as a hard plastic shell, an aluminum shell, a steel shell, or the like. Alternatively, the outer package of the lithium secondary battery may be a soft package such as a pouch-type soft package. The soft package may be made of plastic such as polypropylene, polybutylene terephthalate, or polybutylene succinate.

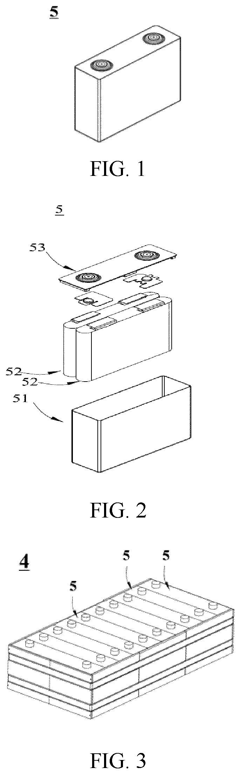

The shape of the lithium secondary battery is not particularly limited in this application, and may be cylindrical, prismatic or any other shape. FIG. 1 shows a prismatic lithium secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. The housing 51 is provided with an opening that communicates to the accommodation cavity. The cover plate 53 can be placed over the opening to seal the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a lithium secondary battery 5 may be one or more, and may be selected by a person skilled in the art as actually required.

The lithium secondary battery may be in the form of a battery cell, a battery module, a battery pack, or the like. In some embodiments, the battery cell may be assembled into a battery module. The battery module may include one or more battery cells, and the specific number of battery cells in a battery module may be selected by a person skilled in the art depending on the application scenario and capacity of the battery module.

FIG. 3 shows a battery module 4 as an example. Referring to FIG. 3, in the battery module 4, a plurality of battery cells 5 may be arranged sequentially along a length direction of the battery module 4. Alternatively, the secondary batteries may be arranged in any other manner. Further, the plurality of battery cells 5 may be fixed by a fastener.

Optionally, the battery module 4 may further include a shell that provides an accommodation space. The plurality of battery cells 5 are accommodated in the accommodation space.

In some embodiments, the battery cells may be assembled to form a battery pack. In some embodiments, the battery module may be assembled to form a battery pack. The battery pack may include one or more battery modules, and the specific number of battery modules in a battery pack may be selected by a person skilled in the art depending on practical applications and capacity of the battery pack.

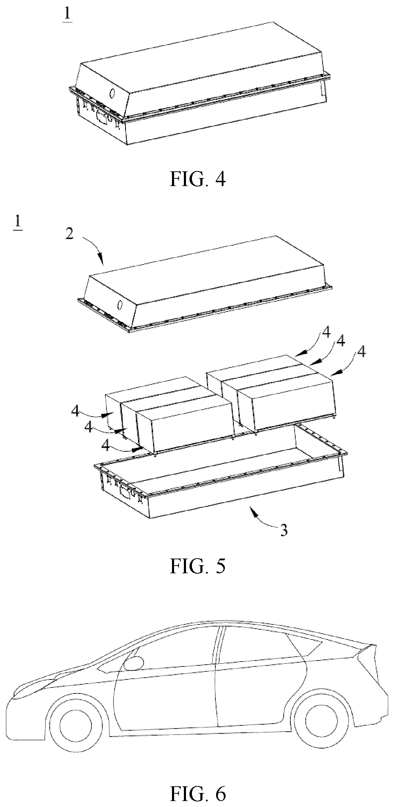

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes the lithium secondary battery according to this application. The lithium secondary battery may be used as a power supply of the electrical device, or used as an energy storage unit of the electrical device. The electrical devices may include, but are not limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The lithium secondary battery may be selected for use in the electrical device according to the use requirements.

FIG. 6 shows an electrical device as an example. The electrical device may be a battery electric vehicle, a hybrid electric vehicle, a plug-in hybrid electric vehicle, or the like. The electrical device may employ a battery pack or a battery module in order to meet the requirements of the electrical device on a high power and a high energy density of the lithium secondary battery.

In another example, the device may be a mobile phone, a tablet computer, a notebook computer, or the like. The device is generally required to be thin and light, and may use the lithium secondary battery as a power supply.

### Embodiments

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

### Preparing a lithium secondary battery (such as 3.4 Ah soft-pack cell)

### 1. Nonaqueous electrolyte

Mixing ethylene carbonate (EC) and ethyl methyl carbonate (EMC) well at a volume ratio of 3: 7 in an argon atmosphere glovebox (in which the content of H₂O is less than 0.1 ppm, and the content of O₂ is less than 0.1 ppm) to form an organic solvent, adding and dissolving 1.8 grams of a LiPF₆ lithium salt in 12.2 grams of the organic solvent, adding 0.3 gram of compound (1) specified in Table 1 and 0.11 mg of NaPF₆ (corresponding to a sodium content of 1 ppm), and stirring well to obtain a nonaqueous electrolyte solution.

### 2. Positive electrode plate

Dissolving the lithium manganese iron phosphate positive active material (LiMn_{0.60}Fe_{0.40}PO₄, commercially available), acetylene black as a conductive agent, and polyvinylidene difluoride (PVDF) as a binder at a mass ratio of 92: 2.5: 5.5, which are 24.6 grams in total, into 16 mL of N-methyl pyrrolidone (NMP), and stirring well to obtain a positive electrode slurry. Subsequently, coating an aluminum foil with the positive electrode slurry evenly at a concentration of 0.280 g/1540.25 mm², and performing oven-drying, cold-pressing, and slitting to obtain a positive electrode plate.

### 3. Negative electrode plate

Dispersing artificial graphite as a negative active material, hard carbon, acetylene black as a conductive agent, styrene-butadiene rubber (SBR) as a binder, and sodium carboxymethyl cellulose (CMC-Na) as a thickener at a mass ratio of 90: 5: 2: 2: 1,which are 14.0 grams in total, into 12 mL of deionized water solvent, and stirring well to obtain a negative electrode slurry. Coating a negative current collector copper foil with the negative electrode slurry evenly at a concentration of 0.117 g/1540.25 mm², and performing oven-drying, cold-pressing, and slitting to obtain a negative electrode plate.

### 4. Separator

Using a commercially available PP-PE copolymer microporous film (model: 20, manufactured by Zhuogao Electronics Technology Co., Ltd.) with a thickness of 20 µm and an average pore diameter of 80 nm as a separator.

### 5. Preparing a battery

Stacking the above-prepared positive electrode plate, the separator, and the negative electrode plate sequentially, placing the separator between the positive electrode and the negative electrode to serve a function of separation, and winding the stacked structure to obtain a bare cell. Putting the bare cell into an outer package, injecting the above electrolyte solution, and sealing the package to obtain a soft-pack full-cell (hereinafter also referred to as "full-cell") with a length, width, and thickness of 140 mm, 60 mm, and 4 mm respectively, and with a nominal capacity of 3.4 Ah.

Understandably, although the soft pack is used as an example in the embodiment, this application is not limited to the example. The nonaqueous electrolyte solution according to this application is also applicable to hard-pack cells and other forms of batteries.

### Embodiments 2 to 21 and 24 to 37 and Comparative Embodiments 1 to 3

The battery is prepared by a method similar to that in Embodiment 1 except the differences shown in Table 1.

### Embodiment 22

The battery is prepared by a method similar to that in Embodiment 1 except the differences shown in Table 1. The doped lithium manganese iron phosphate material is prepared by the following process:

Preparing manganese oxalate co-doped with Fe, Co, and V: Mixing 689.5 grams of manganese carbonate (calculated based on the equivalent amount of MnCO₃, the same below), 455.2 grams of ferrous carbonate (calculated based on the equivalent amount of FeCO₃, the same below), 4.6 grams of cobalt sulfate (calculated based on the equivalent amount of CoSO₄, the same below), and 4.9 grams of vanadium dichloride (calculated based on the equivalent amount of VCl₂, the same below) thoroughly in a mixer for 6 hours. Transferring the mixture into a reactor, and adding 5 liters of deionized water and 1260.6 grams of oxalic acid dihydrate (calculated based on the equivalent amount of C₂H₂O_{4.2}H₂O, the same below). Heating the reactor to 80 °C, and stirring the mixture at a speed of 600 rpm for 6 hours until the reaction is terminated (no bubbles are generated), so as to obtain a manganese oxalate suspension co-doped with Fe, Co, V, and S. Subsequently, filtering the suspension, drying the filter cake at 120°C, and then grinding the filter cake to obtain manganese oxalate dihydrate particles co-doped with Fe, Co, and V, where the volume median diameter Dᵥ₅₀ of the particles is 100 nm.

Preparing lithium manganese phosphate co-doped with Fe, Co, V and S: Adding the manganese oxalate dihydrate particles (1793.4 g) obtained in the previous step, 369.0 grams of lithium carbonate (calculated based on the equivalent amount of Li₂CO₃, the same below), 1.6 g dilute sulfuric acid with a concentration of 60% (calculated based on the equivalent amount of 60 wt% H₂SO₄, the same below), and 1148.9 grams of ammonium dihydrogen phosphate (calculated based on the equivalent amount of NH₄H₂PO₄, the same below) into 20 liters of deionized water, and stirring the mixture for 10 hours thoroughly to obtain a slurry. Transferring the slurry into a spray-drying device to undergo spray-drying granulation. Setting the drying temperature to 250 °C, and keeping drying for 4 hours to obtain a powder. Sintering the powder in protective atmosphere of nitrogen (90 vol%) plus hydrogen (10 vol%) at 700 °C for 4 hours to obtain 1572.1 grams of lithium manganese phosphate co-doped with Fe, Co, V, and S.

### Embodiment 23

The battery is prepared by a method similar to that in Embodiment 1 except the differences shown in Table 1. The coated lithium manganese iron phosphate material is prepared by the following process:

### (1) Preparing lithium iron pyrophosphate and lithium iron phosphate

Preparing lithium iron pyrophosphate powder: dissolving 4.77 grams of lithium carbonate, 7.47 grams of ferrous carbonate, 14.84 grams of ammonium dihydrogen phosphate, and 1.3 grams of oxalic acid dihydrate in 50 mL of deionized water. Setting the pH value of the mixture to 5, and stirring the mixture for 2 hours to fully react. Subsequently, heating the reacted solution to 80 °C, and holding the temperature for 4 hours to obtain a suspension containing Li₂FeP₂O₇. Filtering the suspension, washing the filter residue by using deionized water, and drying the filter residue at 120 °C for 4 hours to obtain a powder. Sintering the powder at 650 °C in a nitrogen atmosphere for 8 hours, naturally cooling the sintered product to room temperature, and grinding the sintered product to obtain Li₂FeP₂O₇ powder.

Preparing a lithium iron phosphate suspension: Dissolving 11.1 grams of lithium carbonate, 34.8 grams of ferrous carbonate, 34.5 grams of ammonium dihydrogen phosphate, 1.3 grams of oxalic acid dihydrate, and 74.6 grams of sucrose (calculated based on the equivalent amount of C₁₂H₂₂O₁₁, the same below) in 150 mL of deionized water to obtain a mixture, and then stirring the mixture for 6 hours to fully react. Subsequently, heating the reacted solution to 120 °C, and holding the temperature for 6 hours to obtain a suspension containing LiFePO₄.

### (2) Coating

Adding 1572.1 grams of lithium manganese phosphate co-doped with Fe, Co, V, and S and prepared in Embodiment 22 and 15.72 grams of the lithium iron pyrophosphate (Li₂FeP₂O₇) powder into the lithium iron phosphate (LiFePO₄) suspension prepared in the previous step. Stirring well and then transferring the mixture into a vacuum oven in which the mixture is dried at 150 °C for 6 hours. Dispersing the resultant product by using a sand mill. Sintering the dispersed product at 700 °C in a nitrogen atmosphere for 6 hours to obtain a target product, that is, double layer-coated lithium manganese phosphate.

### Performance test

### 1. Testing the cycle life at 45 °C

Charging the full-cell prepared in each of the above embodiments and comparative embodiments at a current of 1C in a 45 °C constant-temperature environment until the voltage reaches a 4.3 V upper limit in a voltage range of 2.5 V to 4.3 V, and then charging the full-cell at a constant voltage of 4.3 V until the current is less than or equal to 0.05 mA. Leaving the cell to stand for 5 minutes, and then discharging the cell at a current of 1C until the voltage drops to 2.5 V, and recording the discharge capacity at this time as D₀. Repeating the above charge-discharge cycle until the discharge capacity is reduced to 80% of D₀. Recording the number of cycles undergone by the battery at this time. Recording the test results in the following table.

### 2. Testing the capacity retention rate of the cell stored at 60 °C

Charging and discharging the lithium-ion full-cell prepared in each embodiment and comparative embodiment at normal temperature (25 °C) for one 0.33C/0.33C cycle, with an upper voltage limit of 4.3 V. Recording the discharge capacity of the cell as C₀. Leaving the cell to stand in a 60 °C oven for 30 days, and then taking the cell out, discharging the cell in 25 °C environment at a current of 0.33C until the voltage drops to a lower cut-off limit, and recording the discharge capacity as C₁. Calculating the capacity retention rate as: capacity retention rate = (C₁/C₀) × 100 %.

### 3. Testing the volume expansion rate of the battery after being stored at 60 °C

Charging, at 25 °C, a ready-made lithium secondary battery at a constant current of 1C until the voltage reaches 4.3 V, and then charging the battery at a constant voltage of 4.3 V until the current drops to 0.05C, and then discharging the lithium secondary battery at a constant current of 1C until the voltage drops to 2.5 V, and recording the discharge capacity at this time as a discharge capacity of the lithium secondary battery before high-temperature storage. Subsequently, charging the lithium secondary battery at a constant current of 1C until the voltage reaches 4.3 V, and then charging the battery at a constant voltage of 4.3 V until the current drops to 0.05C indicating that the lithium-ion battery is fully charged. Measuring the volume of the battery by using a water displacement method. Subsequently, storing the lithium-ion battery at 60 °C for 30 days. Placing the lithium secondary battery in a 25 °C environment upon completion of the storage, and measuring the volume of the battery by using a water displacement method.Calculating the volume expansion rate of the battery as: volume expansion rate = (post-storage volume/initial volume)%.

### 4. Determining the surface oxidation state of the positive active material

Adding the lithium manganese phosphate positive active material prepared in each of the above embodiments and comparative embodiments, PVDF, and acetylene black at a mass ratio of 90: 5: 5 into NMP, and stirring the mixture in a drying room to form a slurry. Applying the slurry onto an aluminum foil, and drying and cold-pressing the foil to form a positive electrode plate. The coating areal density of the slurry is 0.2 g/cm², and the compaction density of the electrode plate is 2.0 g/cm³.

Using a lithium sheet as a negative electrode, and assembling the negative electrode together with the above-prepared positive electrode plate and nonaqueous electrolyte solution in a coin cell box to form a coin cell (also referred to as a "button cell").

Taking 5 grams of the above positive active material specimen, and preparing a coin cell with the specimen according to the above coin cell preparation method. Charging the coin cell at a low current rate of 0.05C until the current tapers off to 0.01C. Subsequently, taking out the positive electrode plate from the coin cell, and soaking the positive electrode plate in dimethyl carbonate (DMC) for 8 hours. Subsequently, drying the positive electrode plate, scraping off the powder, and sifting out the particles with a particle size less than 500 nm. Analyzing the resultant particles by using an electron energy loss spectrometer (EELS) (the model of the instrument is Talos F200S) to obtain an energy loss near edge structure (ELNES) reflecting the state density and energy level distribution of the element. Calculating the number of occupied electrons by integrating the valence band state density based on the state density and energy level distribution, and then deducing the valence state of surface oxygen after charging.

In Table 1 below, for the types of the additive compounds (1), (2), (4), and (7) to (15), reference may be made to the corresponding structural formula described earlier above; and the mass percent of Na/K ions and the mass percent of the additives are calculated based on the total mass of the nonaqueous electrolyte solution.

**Table 1 (To be continued)**

| Embodiment | Sodium/potassium salt | | Mass fraction of Na and/or K ions (ppm) | Additive | | Mass percent of additive (%) | W (mass of Na/K ions/mass of additive) |
|---|---|---|---|---|---|---|---|
| | Type | Mass (mg) | | Compound | Mass (g) | | |
| Embodiment 1 | NaPF₆ | 0.11 | 1 | (1) | 0.30 | 2% | 0.0001 |
| Embodiment 2 | NaPF₆ | 1.10 | 10 | (1) | 0.30 | 2% | 0.0005 |
| Embodiment 3 | NaPF₆ | 5.48 | 50 | (1) | 0.30 | 2% | 0.003 |
| Embodiment 4 | NaPF₆ | 54.77 | 500 | (1) | 0.30 | 2% | 0.025 |
| Embodiment 5 | NaPF₆ | 109.54 | 1000 | (1) | 0.30 | 2% | 0.05 |
| Embodiment 6 | NaPF₆ | 164.30 | 1500 | (1) | 0.30 | 2% | 0.075 |
| Embodiment 7 | NaPF₆ | 219.07 | 2000 | (1) | 0.30 | 2% | 0.1 |
| Embodiment 8 | NaPF₆ | 328.61 | 3000 | (1) | 0.30 | 2% | 0.15 |
| Embodiment 9 | NaPF₆ | 383.37 | 3500 | (1) | 0.30 | 2% | 0.175 |
| Embodiment 10 | NaPF₆ | 0.05 | 0.5 | (1) | 0.30 | 2% | 0.00003 |
| Embodiment 11 | NaPF₆ | 54.77 | 500 | (1) | 1.50 | 10% | 0.005 |
| Embodiment 12 | NaPF₆ | 54.77 | 500 | (1) | 0.75 | 5% | 0.01 |
| Embodiment 13 | NaPF₆ | 54.77 | 500 | (1) | 0.08 | 0.5% | 0.1 |
| Embodiment 14 | NaPF₆ | 54.77 | 500 | (1) | 0.15 | 0.1% | 0.5 |
| Embodiment 15 | NaPF₆ | 54.77 | 500 | (1) | 3.00 | 20% | 0.0025 |
| Embodiment 16 | NaPF₆ | 54.77 | 500 | (1) | 0.008 | 0.05% | 1 |
| Embodiment 17 | NaPF₆ | 54.77 | 500 | (1) | 0.3 | 2% | 0.025 |
| Embodiment 18 | NaPF₆ | 54.77 | 500 | (1) | 0.3 | 2% | 0.025 |
| Embodiment 19 | NaPF₆ | 54.77 | 500 | (1) | 0.3 | 2% | 0.025 |
| Embodiment 20 | NaPF₆ | 54.77 | 500 | (1) | 0.3 | 2% | 0.025 |
| Embodiment 21 | NaPF₆ | 54.77 | 500 | (1) | 0.3 | 2% | 0.025 |
| Embodiment 22 | NaPF₆ | 54.77 | 500 | (1) | 0.3 | 2% | 0.025 |
| Embodiment 23 | NaPF₆ | 54.77 | 500 | (1) | 0.3 | 2% | 0.025 |
| Embodiment 24 | NaPF₆ | 54.77 | 500 | (11) | 0.3 | 2% | 0.025 |
| Embodiment 25 | NaPF₆ | 54.77 | 500 | (8) | 0.3 | 2% | 0.025 |
| Embodiment 26 | NaPF₆ | 54.77 | 500 | (2) | 0.3 | 2% | 0.025 |
| Embodiment 27 | NaPF₆ | 54.77 | 500 | (4) | 0.3 | 2% | 0.025 |
| Embodiment 28 | NaPF₆ | 54.77 | 500 | (7) | 0.3 | 2% | 0.025 |
| Embodiment 29 | NaPF₆ | 54.77 | 500 | (10) | 0.3 | 2% | 0.025 |
| Embodiment 30 | NaPF₆ | 54.77 | 500 | (9) | 0.3 | 2% | 0.025 |
| Embodiment 31 | NaPF₆ | 54.77 | 500 | (12) | 0.3 | 2% | 0.025 |
| Embodiment 32 | NaPF₆ | 54.77 | 500 | (13) | 0.3 | 2% | 0.025 |
| Embodiment 33 | NaPF₆ | 54.77 | 500 | (14) | 0.3 | 2% | 0.025 |
| Embodiment 34 | NaPF₆ | 54.77 | 500 | (15) | 0.3 | 2% | 0.025 |
| Embodiment 35 | KPF₆ | 35.31 | 500 | (1) | 0.3 | 2% | 0.025 |
| Embodiment 36 | NaClO₄ | 39.93 | 500 | (1) | 0.3 | 2% | 0.025 |
| Embodiment 37 | NaN(FSO ₂)₂ | 66.23 | 500 | (1) | 0.3 | 2% | 0.025 |
| Comparative Embodiment 1 | / | 54.77 | / | (1) | 0.3 | 2% | / |
| Comparative Embodiment 2 | NaPF₆ | 54.77 | 500 | / | | / | / |
| Comparative Embodiment 3 | / | 54.77 | / | / | | / | / |

**Table 1 (Continued)**

| Embodiment | Positive active material | | Performance of lithium secondary battery | | |
|---|---|---|---|---|---|
| | Type | Surface oxygen valence state | Number of cycles at 45 °C | Capacity retention rate after storing at 60 °C (%) | Expansion rate after storing at 60 °C (%) |
| Embodiment 1 | LiMn_{0.60}Fe_{0.40}PO₄ | -1.93 | 1021 | 91.5% | 5.4% |
| Embodiment 2 | LiMn_{0.60}Fe_{0.40}PO₄ | -1.93 | 1167 | 92.1% | 5.2% |
| Embodiment 3 | LiMn_{0.60}Fe_{0.40}PO₄ | -1.93 | 1231 | 92.9% | 5.0% |
| Embodiment 4 | LiMn_{0.60}Fe_{0.40}PO₄ | -1.93 | 1345 | 93.7% | 4.8% |
| Embodiment 5 | LiMn_{0.60}Fe_{0.40}PO₄ | -1.93 | 1301 | 93.1% | 4.9% |
| Embodiment 6 | LiMn_{0.60}Fe_{0.40}PO₄ | -1.93 | 1256 | 92.4% | 5.1% |
| Embodiment 7 | LiMn_{0.60}Fe_{0.40}PO₄ | -1.93 | 1145 | 91.9% | 5.3% |
| Embodiment 8 | LiMn_{0.60}Fe_{0.40}PO₄ | -1.93 | 1011 | 91.2% | 5.3% |
| Embodiment 9 | LiMn_{0.60}Fe_{0.40}PO₄ | -1.93 | 978 | 90.3% | 5.4% |
| Embodiment 10 | LiMn_{0.60}Fe_{0.40}PO₄ | -1.93 | 996 | 90.5% | 5.8% |
| Embodiment 11 | LiMn_{0.60}Fe_{0.40}PO₄ | -1.93 | 1245 | 92.6% | 5.2% |
| Embodiment 12 | LiMn_{0.60}Fe_{0.40}PO₄ | -1.93 | 1330 | 93.4% | 4.9% |
| Embodiment 13 | LiMn_{0.60}Fe_{0.40}PO₄ | -1.93 | 1299 | 93.2% | 51% |
| Embodiment 14 | LiMn_{0.60}Fe_{0.40}PO₄ | -1.93 | 1178 | 92.2% | 5.5% |
| Embodiment 15 | LiMn_{0.60}Fe_{0.40}PO₄ | -1.93 | 1101 | 91.3% | 5.4% |
| Embodiment 16 | LiMn_{0.60}Fe_{0.40}PO₄ | -1.93 | 1067 | 91.1% | 5.8% |
| Embodiment 17 | LiMn_{0.60}Fe_{0.40}PO₄ | -1.88 | 1278 | 92.3% | 5.3% |
| Embodiment 18 | LiMn_{0.60}Fe_{0.40}PO₄ | -1.93 | 1345 | 93.7% | 4.8% |
| Embodiment 19 | LiMn_{0.60}Fe_{0.40}PO₄ | -1.98 | 1301 | 93.1% | 5.0% |
| Embodiment 20 | LiMn_{0.60}Fe_{0.40}PO₄ | -1.99 | 1289 | 92.7% | 5.1% |
| Embodiment 21 | LiMn_{0.60}Fe_{0.40}PO₄ | -1.87 | 1178 | 91.9% | 5.6% |
| Embodiment 22 | Li_{0.999}Mn_{0.60}Fe_{0.393}V_{0.004}Co_{0.003}P _{0.999}S_{0.001}O₄ | -1.93 | 1467 | 94.6% | 4.5% |
| Embodiment 23 | Coated Li_{0.999}Mn_{0.60}Fe_{0.393}V_{0.004}Co_{0.003}P _{0.999}S_{0.001}O₄ | -1.93 | 1532 | 95.3% | 4.0% |
| Embodiment 24 | LiMn_{0.60}Fe_{0.40}PO₄ | -1.93 | 1267 | 93.0% | 5.0% |
| Embodiment 25 | LiMn_{0.60}Fe_{0.40}PO₄ | -1.93 | 1201 | 92.7% | 5.3% |
| Embodiment 26 | LiMn_{0.60}Fe_{0.40}PO₄ | -1.93 | 1245 | 92.9% | 5.1% |
| Embodiment 27 | LiMn_{0.60}Fe_{0.40}PO₄ | -1.93 | 1157 | 92.4% | 5.5% |
| Embodiment 28 | LiMn_{0.60}Fe_{0.40}PO₄ | -1.93 | 1153 | 92.2% | 5.4% |
| Embodiment 29 | LiMn_{0.60}Fe_{0.40}PO₄ | -1.93 | 1204 | 92.7% | 5.2% |
| Embodiment 30 | LiMn_{0.60}Fe_{0.40}PO₄ | -1.93 | 1176 | 92.4% | 5.3% |
| Embodiment 31 | LiMn_{0.60}Fe_{0.40}PO₄ | -1.93 | 1235 | 92.6% | 5.2% |
| Embodiment 32 | LiMn_{0.60}Fe_{0.40}PO₄ | -1.93 | 1211 | 92.5% | 5.4% |
| Embodiment 33 | LiMn_{0.60}Fe_{0.40}PO₄ | -1.93 | 1198 | 92.2% | 5.6% |
| Embodiment 34 | LiMn_{0.60}Fe_{0.40}PO₄ | -1.93 | 1242 | 92.5% | 5.3% |
| Embodiment 35 | LiMn_{0.60}Fe_{0.40}PO₄ | -1.93 | 1301 | 93.2% | 4.9% |
| Embodiment 36 | LiMn_{0.60}Fe_{0.40}PO₄ | -1.93 | 1323 | 93.4% | 5.0% |
| Embodiment 37 | LiMn_{0.60}Fe_{0.40}PO₄ | -1.93 | 1299 | 92.9% | 5.2% |
| Comparative Embodiment 1 | LiMn_{0.60}Fe_{0.40}PO₄ | -1.93 | 901 | 88.3% | 6.5% |
| Comparative Embodiment 2 | LiMn_{0.60}Fe_{0.40}PO₄ | -1.93 | 967 | 89.3% | 6.7% |
| Comparative Embodiment 3 | LiMn_{0.60}Fe_{0.40}PO₄ | -1.93 | 823 | 85.2% | 8.1% |

As can be seen from Comparative Embodiment 1 and Embodiments 1 to 10, the sodium salt or potassium salt added can significantly improve the cycle performance of the lithium secondary battery at 45 °C and the capacity retention rate of the battery stored at high temperature for a long term, and significantly reduce the expansion rate of the lithium secondary battery stored at high temperature for a long term. When the mass fraction of the Na or K ions in the nonaqueous electrolyte solution falls within the range of 0.5 to 3500 ppm, the SEI film is dense and can effectively prevent electron tunneling, thereby improving the cycle performance and high-temperature storage performance of the lithium secondary battery at relatively high temperature.

As can be seen from Comparative Embodiment 2 and Embodiments 11 to 17, after the additive represented by the general formula I specified herein is added, the additive can significantly improve the cycle performance of the lithium secondary battery at 45 °C and the capacity retention rate of the battery stored at high temperature for a long term, and significantly reduce the expansion rate of the lithium secondary battery stored at high temperature for a long term. When the mass W of the mass of the Na or K ions in the nonaqueous electrolyte solution to the mass of the additive represented by the general formula I falls within the range of 0.0001 to 1, the proportion of the organic constituents and the proportion of the inorganic constituents in the SEI film are favorable, thereby more significantly improving the cycle performance and high-temperature storage performance of the lithium secondary battery at relatively high temperature.

As can be seen from Embodiments 18 to 21, when falling within the range of -1.87 to -1.99, the surface oxygen valence state of the positive active material can avoid the following possible situations: due to an excessively high surface oxygen valence state of the positive active material, the positive active material is highly capable of gaining electrons, so as to oxidize the electrolyte solution to produce a large amount of by-products, thereby impairing the cycle performance and high-temperature storage performance of the lithium secondary battery at relatively high temperature.

As can be seen from Embodiment 4 and Embodiments 22 to 24, after the lithium manganese iron phosphate material is doped and coated, the damage caused by Mn dissolution to the negative electrode SEI film is effectively reduced. In addition, the coating treatment can reduce the contact between the core lithium manganese iron phosphate and the electrolyte solution, thereby further improving the cycle performance and high-temperature storage performance of the lithium secondary battery at relatively high temperature.

As can be seen from Embodiments 26 to 35, the effect of improving the battery performance varies slightly with the type of the additive represented by Formula I and put in use.

In contrast to Comparative Embodiment 3, in Embodiments 1 to 35, due to the use of the additive represented by the general formula I and the sodium/potassium-containing compound, the cycle performance of the lithium secondary battery at 45 °C and the capacity retention rate of the battery stored at high temperature for a long term are improved significantly, and the expansion rate of the lithium secondary battery stored at high temperature for a long term is reduced significantly.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A nonaqueous electrolyte solution, comprising:
(1) at least one additive represented by general formula I, 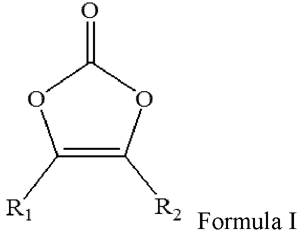 wherein, R₁ and R₂ each are independently hydrogen, hydroxyl, amino, thiol, halogen, C₁ to C₆ alkyl, C₁ to C₆ haloalkyl, C₂ to C₆ alkenyl, C₂ to C₆ alkynyl, or a group represented by a general formula II: 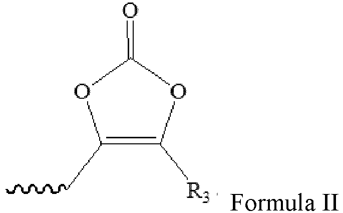 wherein, R₃ is hydrogen, hydroxyl, amino, thiol, halogen, C₁ to C₆ alkyl, C₁ to C₆ haloalkyl, C₂ to C₆ alkenyl, or C₂ to C₆ alkynyl,
in Formula II, a wavy line represents a bonding site to Formula I,
and
(2) Na and/or K ions.

2. The nonaqueous electrolyte solution according to claim 1, **characterized in that**, in general formula I, R₁ and R₂ each are independently hydrogen, fluorine, methyl, ethyl, propyl, tert-butyl, vinyl, monofluoromethyl, difluoromethyl, trifluoromethyl, or a group represented by general formula II, and, in general formula II, R₃ is hydrogen, fluorine, methyl, ethyl, propyl, tert-butyl, vinyl, monofluoromethyl, difluoromethyl, or trifluoromethyl.

3. The nonaqueous electrolyte solution according to claim 1 or 2, **characterized in that** the additive represented by general formula I comprises the following compounds:

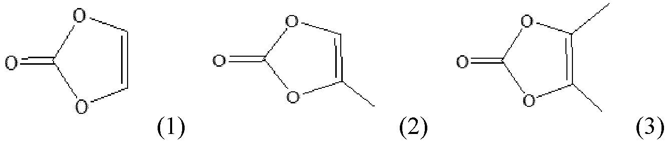

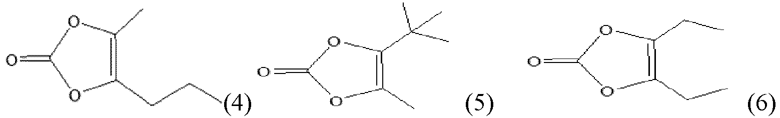

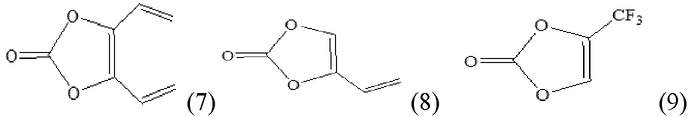

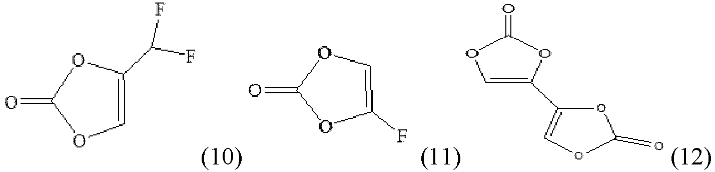

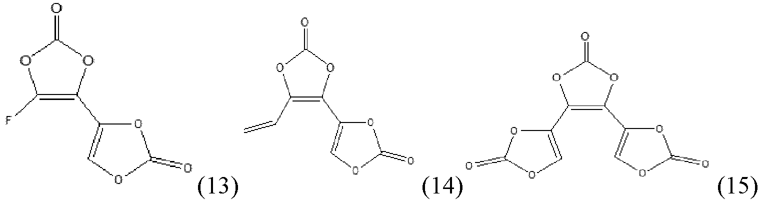

4. The nonaqueous electrolyte solution according to any one of claims 1 to 3, **characterized in that** a ratio of a mass of the Na and/or K ions in the nonaqueous electrolyte solution to a mass of the additive represented by general formula I is W, satisfying: 0.00003 ≤ W ≤ 1, optionally 0.0005 ≤ W ≤ 0.50, and further optionally 0.0005 < W < 0.10.

5. The nonaqueous electrolyte solution according to any one of claims 1 to 4, **characterized in that** a mass fraction of the Na and/or K ions in relation to a total mass of the electrolyte solution is 0.5 to 3000 ppm, optionally 10 to 1500 ppm, and further optionally 50 to 1000 ppm.

6. The nonaqueous electrolyte solution according to any one of claims 1 to 5, **characterized in that** a mass percent of the additive represented by general formula I in relation to a total mass of the electrolyte solution is 0.05 wt% to 20 wt%, optionally 0.1 wt% to 10 wt%, and further optionally 0.3 wt% to 8 wt%.

7. The nonaqueous electrolyte solution according to any one of claims 1 to 6, **characterized in that** the nonaqueous electrolyte solution comprises a sodium salt and/or a potassium salt, and anions of the sodium salt and/or potassium salt comprise one or more of AsF⁻, ClO₄⁻, SbF₆⁻, PtCl₆⁻, AlCl₄⁻, SCN⁻, CF₃CF₂SO₃⁻, (CF₃)SO₃⁻, C(SO₂CF₃)₃⁻, PF6⁻, PF₃(CF₃)₃⁻, BF₄⁻, B(C₂O₄)₂⁻, BF₂(C₂O₄)⁻, B(C₂O₄)(C₃O₄)⁻, (C₂F₅BF₃)⁻, N(SO₂CF₃)₂⁻, N(FSO₂)₂⁻, and/or N(SO₂C₂F₅)₂⁻.

8. A lithium secondary battery, comprising a positive electrode plate, a negative electrode plate, and the nonaqueous electrolyte solution according to any one of claims 1 to 8.

9. The lithium secondary battery according to claim 8, **characterized in that** the positive electrode plate comprises a positive active material, and a surface oxygen valence state of the positive active material is -1.87 or lower, and optionally -1.98 to - 1.90.

10. The lithium secondary battery according to claim 8 or 9, **characterized in that** the positive electrode plate comprises a lithium manganese iron phosphate material.

11. The lithium secondary battery according to any one of claims 8 to 10, **characterized in that** the lithium manganese iron phosphate material comprises lithium manganese iron phosphate, doped lithium manganese iron phosphate, and core-shell structured lithium manganese iron phosphate.

12. The lithium secondary battery according to any one of claims 8 to 11, **characterized in that** the lithium manganese iron phosphate material is represented by a chemical formula Li₁₊ₓMn_{1-y}A_{y}P_{1-z}R_{z}O₄, wherein x is any value in a range of -0.100 to 0.100; y is any value in a range of 0.001 to 0.500; z is any value in a range of 0.001 to 0.100; A is Fe or a combination of Fe and one or more of elements Ti, V, Ni, Co, or Mg; R is one or more selected from elements B, Si, N, or S; optionally, R is one element selected from B, Si, N, or S; and values of x, y, and z satisfy a condition that an entire positive active material is kept electrically neutral.

13. The lithium secondary battery according to any one of claims 8 to 12, **characterized in that** the lithium manganese iron phosphate material is core-shell structured lithium manganese iron phosphate, and a chemical formula of the core is Li₁₊ₓMn_{1-y}A_{y}P_{1-z}R_{z}O₄, wherein x is any value in a range of -0.100 to 0.100; y is any value in a range of 0.001 to 0.500; z is any value in a range of 0.001 to 0.100; A is Fe or a combination of Fe and one or more of elements Ti, V, Ni, Co, or Mg; R is one or more selected from elements B, Si, N, or S; optionally, R is one element selected from B, Si, N, or S; and values of x, y, and z satisfy a condition that the entire core is kept electrically neutral; the shell comprises a first coating layer that coats the core, a second coating layer that coats the first coating layer, and a third coating layer that coats the second coating layer; the first coating layer comprises a crystalline pyrophosphate salt LiₐMP₂O₇ and/or M_{b}(P₂O₇)_{c}, wherein 0 ≤ a < 2, 1 ≤ b ≤ 4, 1 ≤ c ≤ 6, and values of a, b and c satisfy a condition that the crystalline pyrophosphate salt LiₐMP₂O₇ or M_{b}(P₂O₇)_{c} is kept electrically neutral; each M in the crystalline pyrophosphate salt LiₐMP₂O₇ or M_{b}(P₂O₇)_{c} is independently one or more elements selected from Fe, Ni, Mg, Co, Cu, Zn, Ti, Ag, Zr, Nb, or Al; the second coating layer comprises a crystalline phosphate salt XPO₄, wherein X is one or more elements selected from Li, Fe, Ni, Mg, Co, Cu, Zn, Ti, Ag, Zr, Nb, or Al; and the third coating layer is carbon.

14. An electrical device, **characterized in that** the electrical device comprises the lithium secondary battery according to any one of claims 8 to 13.
